# EUROPEAN PATENT SPECIFICATION

(11) **EP 3 153 220 B1**
(45) Date of publication and mention of the grant of the patent: **08.01.2020**
(21) Application number: 15188293.3
(22) Date of filing: 05.10.2015
(51) Int. Cl.: B01D 35/147, B01D 35/153, B01D 29/11

(54) **CARTRIDGE FOR FILTERING LIQUIDS**
PATRONE ZUR FILTRIERUNG VON FLÜSSIGKEITEN
CARTOUCHE DE FILTRATION DE LIQUIDES

(43) Date of publication of application: 12.04.2017
(73) Proprietor: N.D.R. S.R.L. Soc. Unipersonale, 10060 Bricherasio (Torino) (IT)
(72) Inventor: NOTA, Marco, 10060 Bricherasio (Torino) (IT); NOTA, Andrea, 10060 Bricherasio (Torino) (IT)
(74) Representative: Robba, Pierpaolo

(56) References cited:
- EP-A1- 2 796 179
- EP-A2- 0 650 750
- WO-A1-2013/178680
- DE-C1- 4 306 431
- US-A- 3 357 560
- US-A- 3 608 726
- US-A1- 2008 308 481
- US-A1- 2011 073 537

## Description

### Technical Field

The present invention generally relates to a cartridge for filtering liquids, to be applied to filters comprising at least one inlet channel and at least one outlet channel communicating with the inlet channel.

More particularly, the present invention relates to a cartridge to be applied to filters for filtering oil of internal combustion engines.

### Prior Art

Cartridges for filtering liquids to be applied to filters for liquids are known.

Each of WO2013/178680, US2008/308481, US 2011/073537 EP2796179 A1 relate to filter devices with drainage, but each of them fails to disclose a shutter, that is actuated by a drainage element attached to the filtering element. WO2013/178680 discloses a drainage element that is attached to a lower end of a filter device and unscrewed to effect drainage. US2008/308481 discloses a drain valve at the lower end of a filter that is opened such that fluid can drain. US2011/073537 discloses a knob that allows to pull down a draining element against the actioning of a spring thereby opening drain channels. EP2796179 discloses a drain element screwed to the lower end of a filter device, that has the same attachment mechanism between filtering element and draining element as in the present application.

WO 2013/178680 discloses a filter device having a filter housing equipped with a cover provided with a discharge opening, a filter element connectable to the housing cover and having a discharge opening and a closure element attached to the housing cover which closes off both the housing cover discharge opening and the filter element discharge opening when attached to the housing cover, wherein the closure element, when attached to the housing cover, seals off the dirty side from the clean side in the filter element discharge opening.

The known cartridge comprises two flanges, typically an upper and a lower flange and a filtering element held between the two flanges.

In use, the filter cartridge provides an inlet surface for non-filtered fluid, said inlet surface communicating with the inlet channel of the filter, and an outlet surface for filtered fluid, said outlet surface communicating with the outlet channel of the filter.

A filter and a cartridge for internal combustion engines are known for instance from the patent document EP1106795.

The known filter comprises a filtering chamber having a shutter slidable within the filtering chamber between a lower position, in which the shutter closes a fluid bleed channel, and an upper position, in which the fluid can flow into the bleed channel.

According to said prior art, the shutter is pushed downwards by the filter cartridge fixed to the cover when the cover is closed, and is pushed upwards by a spring when the filter cover is removed.

The filter cartridge comprises a central hole communicating with the outlet channel and with the bleed channel for the fluid, and defines, within the central hole, an abutment element keeping the shutter in its lowered position, in which the bleed channel is closed, when the cover is closed.

A technical problem of the known solution lies in the poor flexibility of use of the cartridge in case of use with different types of filters.

Indeed, the presence of the abutment element in the central hole for keeping the shutter in its lowered position prevents use of a standard cartridge, without abutment element, within the filter.

Moreover, in case of application of the filter to different engines, if it is necessary to adapt the filter by changing the size or shape of the shutter, the need arises to provide, for each filter, a specific cartridge having a size compatible with that of the shutter, with consequent increase in costs.

Another problem of the prior art filter can be provoked by the closing of the central hole by means of the cover or elements associated thereto, which, if they are not perfectly tight, may cause leakages and consequent pollution of the filtered fluid by the fluid which is still to be filtered.

In general, the Applicant has found that the prior art cannot effectively solve the problems set forth above.

### Summary of the Invention

The object of the present invention is to solve the problems set forth above.

This object is achieved with the filter for filtering oil of internal combustion engines as claimed.

The claims are an integral part of the technical teaching provided herein in relation to the invention.

The following summary of the invention is given in order to provide a basic understanding of some aspects the invention.

This summary is no broad description and as such it should not be considered as being suitable to identify key elements or critical elements of the invention, nor suitable to define the object of the invention. Its only purpose is to illustrate some concepts of the invention in simplified form in anticipation of the detailed description given below.

According to a feature of a preferred embodiment, the cartridge for filtering liquids according to the invention comprises a filtering element, a drainage device comprising an open mouth and a closed end arranged internally to a longitudinal hole of the filtering element, said drainage device being arranged to constitute a closing plug for closing the longitudinal hole of the filtering element in order to prevent leakages and consequent pollution of the filtered fluid by the fluid which is still to be filtered.

According to a further feature of the present invention, the drainage device comprises a shoulder portion provided on the rim of the mouth of the drainage device, said shoulder portion being adapted to be associated in abutment to a flange of the filtering element.

### Brief Description of the Drawings

These and other features and advantages of the present invention will become more apparent from the following description of preferred embodiments given by way of nonlimiting example with reference to the annexed drawings, in which elements designated with the same or similar reference numerals identify elements having the same or similar functionality and construction and in which:
Fig. 1 shows a sectional view of a cartridge for filtering liquids according to the invention;
Fig. 2 shows a sectional view of a cartridge for filtering liquids according to the invention;
Fig. 3 shows a sectional view of a detail of a cartridge for filtering liquids according to the invention; and
Fig. 4 shows a sectional view of a detail of a cartridge for filtering liquids according to the invention.

### Description of Preferred Embodiments

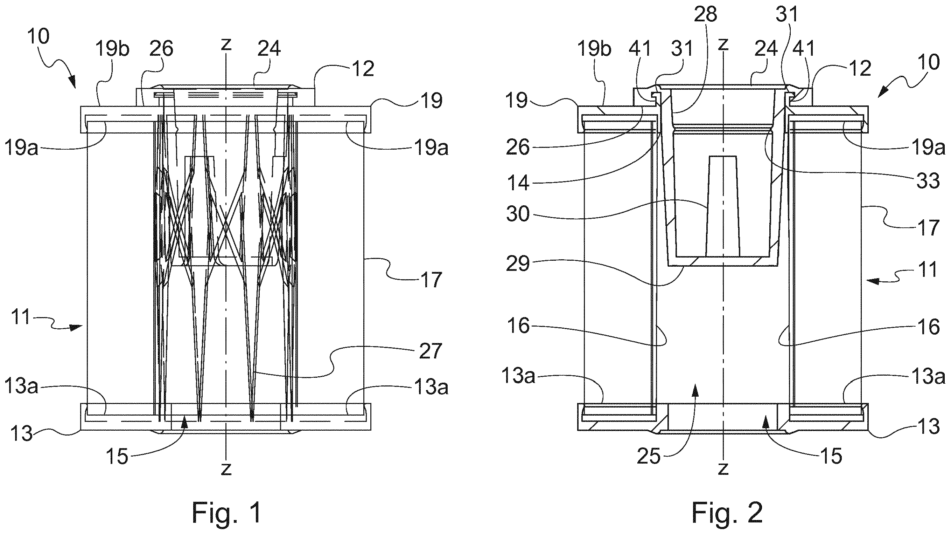

Referring to Figures 1 and 2, a cartridge assembly for filtering liquids or filter cartridge 10 for a filter of known type having at least one inlet channel and one outlet channel, all of them being contained in a filtering chamber that can be closed by means of a cover, comprises, according to the present invention, a modular cartridge or filtering element 11 and a drainage component or drainage device 12 that can be removably connected to the filtering element 11.

The filtering element 11 comprises, preferably, a first flange or first base 19, hereinafter referred to as upper base 19, a second flange or second base 13, hereinafter referred to as lower base 13, and a filtering material 17, of a type known in the art, said filtering material being held in a known manner, for example by gluing or by known methods allowing adhesion between filtering material and plastics for example by means of heat or by using a laser, between the upper base 19 and the lower base 13 along a longitudinal axis Z-Z of the filtering element, preferably a symmetry axis thereof.

The filtering material 17 is arranged so as to define, in the filtering element 11, a longitudinal hole 25 with axis Z-Z communicating with the outlet channel of the filter.

The longitudinal hole 25 has an inner surface 16 having a preferably cylindrical cross-section, said inner surface preferably lying against an inner support structure 27 having preferably a grid-like configuration which is adapted to form, in cooperation with the inner surface 16, surfaces for the passage of the liquid, e.g. oil, towards the outlet channel of the filter.

The internal support structure 27 comprises openings made so as not to obstruct the passage of the liquid through the filtering material 17.

The upper base 19, in use, is arranged transversely to the longitudinal axis of the filtering element 11 and comprises an upper through-hole 14, preferably axial, connected to the upper outlet of the longitudinal hole 25 of the filtering element for containing the drainage device 12.

According to the preferred embodiment, the upper base 19 is configured so that a first surface or side 19a thereof is adapted to be fixed to the filtering material 17 and a second surface or side 19b, opposite to the first one, comprises connection means 31 configured to be removably attachable to the drainage device 12; preferably, the first surface or side 19a is connected or fixed to the filtering material 17 and the connection means 31 are configured so as to be removably attachable to corresponding removably attachable complementary means 41 provided in the drainage device 12.

Preferably the upper base 19 is configured so that the first surface or face 19a is adapted to be fixed to the internal support structure 27 and to the filtering material 17; more preferably, the upper base 19 is configured so that the first surface or side 19a is connected or fixed to the internal support structure 27 and to the filtering material 17.

The connection means 31 illustrated in the Figures are constituted by an elastic element, for example one or more tongues, preferably having different size and/or shape, adapted to be inserted, preferably by snapping, into a groove or cavity 42 of the drainage device 12.

Preferably, the connection means 31 are constituted by a single tongue provided along the entire rim of the upper hole 14.

Preferably, the internal support structure 27 comprises columns with their axes parallel to the longitudinal axis Z-Z of the filtering element 11, and ribs arranged transversely so as to connect two adjacent columns. For instance, the columns may have in their central portion a width larger than the width at their ends connected to the lower base 13 and upper base 19.

The lower base 13, in use, is arranged transversely to the longitudinal axis of the filtering element 11 and comprises a lower through-hole 15, preferably axial, adapted to allow passage of the filtered liquid towards the outlet channel of the filter.

According to the preferred embodiment, the lower base 13 is configured so that a first surface or side 13a thereof is adapted to be fixed to the filtering material 17.

Preferably, the lower base 13 is configured so that the first surface or side 13a is adapted to be fixed to the internal support structure 27 and to the filtering material 17; more preferably, the lower base 13 is configured so that the first surface or side 13a is connected or fixed to the internal support structure 27 and to the filtering material 17.

The drainage device 12 comprises an open mouth 24 and a closed end 29, said closed end being arranged transversely to the longitudinal axis Z-Z of the filtering element 11 and internally to the longitudinal hole 25; the drainage device 12 is arranged to constitute, with its closed end 29, a closing plug for closing the longitudinal hole 25 of the filtering element 11. Preferably, the portion of the drainage device 12 comprising the closed end 29 is arranged, in use, within the longitudinal hole 25 of the filtering element 11.

On the rim of the mouth 24 of the drainage device 12 there is provided a shoulder portion 26 adapted to be associated in abutment to the second surface 19b of the upper base 19.

The drainage device 12 preferably has a frusto-conical shape with the closed end 29 and the open mouth 24.

Preferably, the drainage device 12 comprises a sealing surface 28 on its inner surface located close to the mouth 24; preferably, the drainage device 12 further comprises a collar 33 provided on the sealing surface 28 and adapted to be removably connected to the filter cover; in an alternative solution, the sealing surface 28 may house a gasket, e.g. an o-ring, making a tight seal with the filter cover.

Preferably, the removably connectable complementary means 41 are provided on the outer surface of the mouth 24 and are configured so as to be removably connectable to the connection means 31 of the upper base 19.

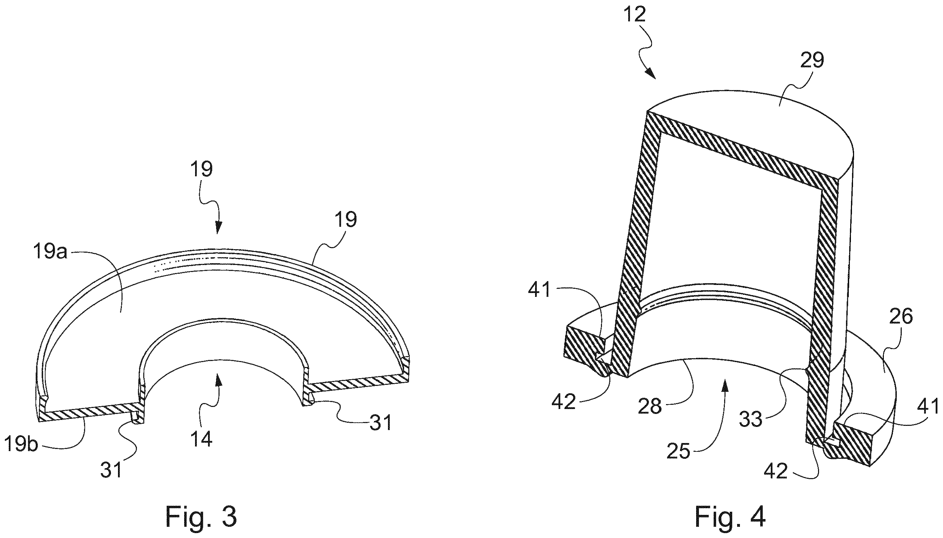

The complementary means 41, in the preferred embodiment of Figure 4, comprise, for example, a groove or cavity 42 configured so that the corresponding connection means 31, consisting for instance of one or more tongues of the upper base 19 can be introduced into the cavity 42 so as to removably connect the filtering element 11 to the drainage device 12.

In an alternative embodiment of the invention, the drainage device 12 comprises at least one opening 30 adapted to connect the inner part of the drainage device 12 to the fluid outlet channel of the filter.

Preferably, the filtering material 17 is connected to the upper base 19 and lower base 13 by means of an adhesive of known type.

In an alternative constructional solution, the filtering material 17 is connected to the upper base 19 and to the lower base 13 by direct adhesion between the filtering material 17 and the bases 19 and 13, such adhesion being obtained for instance by means of known processes that mutually hot-weld or laser-weld, or weld with similar known methods, the filtering material 17, consisting for instance of paper, and the plastics of which the bases 19 and 13 are made.

The operation of the system described so far is as follows.

After a first step of assembling, the cartridge assembly 10 in which the drainage device 12 is connected to the filtering element 11, the cartridge assembly 10 is mounted onto the cover, which will subsequently be fixed, preferably by screwing, to the filtering chamber.

The filtering element 11 is connected to the complementary means 41 of the drainage device 12; preferably, the tongue 31 of the upper base 19 is introduced into the cavity 42 so as to removably connect the drainage device 12 to the filtering element 11.

In a mounting step, the cover of the filter is fixed, for instance by screwing, to the filtering chamber.

Preferably, when the cartridge assembly 10 according to the invention is used with a filter comprising a filtering chamber and a slidable shutter arranged within the filtering chamber and adapted to close the bleed channel for the fluid, the closed end 29 of the drainage device 12 comes into abutment against the shutter inserted in the longitudinal hole 25 of the filtering element 11, so as to push the slidable shutter downwards, thus closing the bleed channel of the filter.

In addition, the presence of the drainage device 12 with closed walls and closed end 29 advantageously avoids the possibility of leakage within the longitudinal hole 25 of the filtering element 11 and consequent pollution of the filtered fluid by the fluid which is still to be filtered.

Furthermore, the collar 33 present on the drainage device 12 allows the drainage device 12 to be removably connected to the cover, thus facilitating opening and closing of the filtering chamber.

In the embodiment of the invention in which the drainage device 12 comprises at least one opening 30 adapted to connect the inner part of the drainage device 12 to the fluid outlet channel, the opening 30 is provided for allowing oil bleed in filters in which a by-pass valve, preferably housed within the drainage device 12, is provided.

In this case, too, there is an increased tight sealing owing to the contact between the sealing surface 28 of the drainage device 12 and the by-pass valve.

A constructional solution is preferably provided in which the sealing surface 28 can house a gasket, for instance an o-ring.

Advantageously, the cartridge of the invention allows to re-use the drainage device 12 and replace only the filtering element 11 in subsequent maintenance interventions, thus allowing cost saving and less environmental pollution.

Advantageously, various types of filtering elements 11 with different filtering characteristics and size can be adapted to the drainage device 12, thus allowing higher standardization of the cartridges that are employed.

Of course, obvious changes and/or variations are possible to the above description, in size, shape, materials, components, connections, as well as in the details of the illustrated construction and of the method of operation, without departing from the invention as defined in the following claims.

## Claims

1. A filter for filtering oil of internal combustion engines comprising:
- a filtering chamber adapted to be closed by means of a cover and a slidable shutter arranged within the filtering chamber and adapted to close a bleed channel for the fluid;
- a cartridge assembly for filtering liquids (10) having at least one inlet channel and one outlet channel, all of them being contained in said filtering chamber, said cartridge assembly (10) comprising:
- a filtering element (11) comprising a first flange (19), a second flange (13) and a filtering material (17) which is arranged so as to define, within the filtering element (11), a longitudinal hole (25) communicating with an outlet channel of the filter, said filtering material (17) being held between said first flange (19) and said second flange (13), said first flange (19) having a first surface (19a) connected to the filtering material (17) and a second surface (19b) which is opposite to the first surface (19a) and comprises removable connection means (31); and
- a drainage component (12) comprising complementary means (41) removably connectable to said connection means (31) of the first flange (19), wherein said drainage component (12) comprises an open mouth (24) and a closed end (29) which is arranged transversely to a longitudinal axis (Z-Z) of the filtering element (11) and internally to the longitudinal hole (25), and wherein said drainage component (12) is arranged to constitute, with its closed end (29), a closing plug for closing the longitudinal hole (25) of the filtering element (11), in order to avoid leakages and consequent pollution of the filtered fluid by the fluid which is still to be filtered, **characterized in that** said closed end (29) of the drainage component (12) comes into abutment against the shutter inserted in the longitudinal hole (25) of the filtering element (11), so as to push the slidable shutter downwards, thus closing the bleed channel of the filter.

2. The filter according to claim 1, **characterized in that** the drainage component (12) comprises a shoulder portion (26) provided on the rim of the mouth (24) of the drainage component (12) and adapted to be associated in abutment to the second surface (19b) of the first flange (19).

3. The filter according to claim 1 or 2, **characterized in that** the drainage component (12) comprises a sealing surface (28) on its inner surface located close to the mouth (24).

4. The filter according to claim 3, **characterized in that** the drainage component (12) comprises a collar (33) provided on the sealing surface (28) and adapted to be removably connected to a filter cover.

5. The filter according to claim 3 or 4, **characterized in that** the drainage component (12) comprises a gasket housed on the sealing surface (28).

6. The filter according to any of the preceding claims, **characterized in that** the drainage component (12) has a frusto-conical shape with a closed end (29) and an open mouth (24) .

7. The filter according to any of the preceding claims, **characterized in that** the removably connectable complementary means (41) are provided on the outer surface of the mouth (24) and are configured so as to be removably connectable to the connection means (31) of the first flange (19).

8. The filter according to any of the preceding claims, **characterized in that** said removably connectable means (31) are constituted by an elastic element and **in that** said complementary means (41) are constituted by a groove (42).

9. The filter according to any of the preceding claims, **characterized in that** the drainage component (12) comprises at least one opening (30) adapted to connect the inner part of the drainage component (12) to a fluid outlet channel of the filter.

10. The filter according to any of the preceding claims, **characterized in that** said first flange (19) is configured so that the first surface (19a) is fixed to an internal support structure (27) and **in that** said filtering material (17) is arranged so as to define an inner surface (16) lying against said internal support structure (27), in order to form surfaces for the passage of the liquid towards the outlet channel of the filter.

## Patentansprüche

1. Filter zum Filtern von Öl von Verbrennungsmotoren mit:
- einer Filterkammer, die dafür ausgelegt ist, mit einem Deckel verschlossen zu werden, und einem verschiebbaren Verschluss, der in der Filterkammer angeordnet und dazu vorgesehen ist, einen Ablasskanal für die Flüssigkeit zu verschließen,
- einer Patronenbaugruppe zum Filtern von Flüssigkeiten (10), die wenigstens
einen Einlasskanal und einen Auslasskanal aufweist, die alle in der Filterkammer enthalten sind, wobei die Patronenbaugruppe (10) aufweist:
- ein Filterelement (11), das einen ersten Flansch (19), einen zweiten Flansch (13) und ein Filtermaterial (17) aufweist, das so angeordnet ist, dass es in dem Filterelement (11) ein Langloch (25) bildet, das mit einem Auslasskanal des Filters in Verbindung steht, wobei das Filtermaterial (17) zwischen dem ersten Flansch (19) und dem zweiten Flansch (13) gehalten ist, wobei der erste Flansch (19) eine erste Oberfläche (19a) hat, die mit dem Filtermaterial (17) in Verbindung steht, und eine zweite Oberfläche (19b), die der ersten Oberfläche (19a) gegenüber liegt und abnehmbare Anschlussmittel (31) aufweist, und
- eine Ablaufkomponente (12), die komplementärere Mittel (41) aufweist, die abnehmbar mit den Verbindungsmitteln (31) des ersten Flansches (19) verbunden werden können, wobei die Ablaufkomponente (12) eine offenen Einlass (24) und ein geschlossenes Ende (29) aufweist, das quer zu einer Längsachse (z-z) des Filterelements (11) und innerhalb des Langlochs (25) angeordnet ist, und wobei die Ablaufkomponente (12) so angeordnet ist, dass sie mit ihrem geschlossenen Ende (29) ein Verschlussstöpsel zum Verschließen des Langloches (25) des Filterelements (11) bildet, um Leckagen und eine entsprechende Verschmutzung des gefilterten Fluides durch noch zu filterndes Fluid zu verhindern, **dadurch gekennzeichnet, dass** das verschlossene Ende (29) der Ablaufkomponente (12) an den Verschluss, der in das Langloch (25) des Filterelements (11) eingesetzt ist, anschlägt, um den verschiebbaren Verschluss nach unten zu schieben und so den Ablaufkanal des Filters zu verschließen.

2. Filter nach Anspruch 1, **dadurch gekennzeichnet, dass** die Ablaufkomponente (12) einen Schulterabschnitt (26) aufweist, der an dem Rand der Öffnung (24) der Ablaufkomponente (12) angeordnet und dafür vorgesehen ist, an der zweiten Oberfläche (19b) des ersten Flansches (19) anzuliegen.

3. Filter nach Anspruch 1 oder 2, **dadurch gekennzeichnet, dass** die Ablaufkomponente (12) eine Dichtfläche (28) an ihrer Innenfläche aufweist, die in der Nähe der Öffnung (24) angeordnet ist.

4. Filter nach Anspruch 3, **dadurch gekennzeichnet, dass** die Ablaufkomponente (12) einen Kragen (33) aufweist, der auf der Dichtfläche (28) vorgesehen und dafür ausgelegt ist, abnehmbar mit dem Filterdeckel verbunden zu werden.

5. Filter nach Anspruch 3 oder 4, **dadurch gekennzeichnet, dass** die Ablaufkomponente (12) eine Dichtung aufweist, die auf der Dichtfläche (28) sitzt.

6. Filter nach einem der vorstehenden Ansprüche, **dadurch gekennzeichnet, dass** die Ablaufkomponente (12) eine kegelstumpfförmige Gestalt mit einem verschlossenem Ende (29) und einer offenen Öffnung (24) hat.

7. Filter nach einem der vorstehenden Ansprüche, **dadurch gekennzeichnet, dass** die abnehmbar verbindbaren Komplementärmittel (41) an der äußeren Oberfläche der Öffnung (24) vorgesehen und so ausgelegt sind, dass sie abnehmbar mit den Verbindungsmitteln (31) des ersten Flansches (19) verbunden werden können.

8. Filter nach einem der vorstehenden Ansprüche, **dadurch gekennzeichnet, dass** die abnehmbaren Verbindungsmittel (31) durch ein elastisches Element gebildet sind, und dass die Komplementärmittel (41) durch eine Nut (42) gebildet sind.

9. Filter nach einem der vorstehenden Ansprüche, **dadurch gekennzeichnet, dass** die Ablaufkomponente (12) wenigstens eine Öffnung (30) aufweist, die dafür ausgelegt ist, den inneren Teil der Ablaufkomponente (12) an einen Flüssigkeitsauslasskanal des Filters anzuschließen.

10. Filter nach einem der vorstehenden Ansprüche, **dadurch gekennzeichnet, dass** der erste Flansch (19) so ausgelegt ist, dass die erste Oberfläche (19a) an einer inneren Stützstruktur (27) befestigt ist, und dass das Filtermaterial (17) so angeordnet ist, dass es eine Innenfläche (16) bildet, die an der inneren Stützstruktur (27) anliegt, um Oberflächen zum Durchlassen der Flüssigkeit hin zu dem Auslasskanal des Filters zu bilden.

## Revendications

1. Filtre pour filtrer l'huile de moteurs à combustion interne, comprenant :
- une chambre de filtration adaptée pour être fermée au moyen d'un couvercle et d'un volet coulissant agencés au sein de la chambre de filtration et adaptés pour fermer un canal de purge pour le fluide ;
- un ensemble cartouche pour filtrer des liquides (10) ayant au moins un canal d'entrée et un canal de sortie, tous étant contenus dans ladite chambre de filtration, ledit ensemble cartouche (10) comprenant :
- un élément de filtration (11) comprenant une première bride (19), une seconde bride (13) et un matériau de filtration (17) qui est agencé de façon à définir, au sein de l'élément de filtration (11), un trou longitudinal (25) communiquant avec un canal de sortie du filtre, ledit matériau de filtration (17) étant maintenu entre ladite première bride (19) et ladite seconde bride (13), ladite première bride (19) ayant une première surface (19a) raccordée au matériau de filtration (17) et une seconde surface (19b) qui est opposée à la première surface (19a) et comprend des moyens de raccordement amovibles (31) ; et
- un composant d'évacuation (12) comprenant des moyens complémentaires (41) pouvant être raccordés de façon amovible auxdits moyens de raccordement (31) de la première bride (19), dans lequel ledit composant d'évacuation (12) comprend un orifice ouvert (24) et une extrémité fermée (29) qui est agencée transversalement à un axe longitudinal (Z-Z) de l'élément de filtration (11) et à l'intérieur du trou longitudinal (25), et dans lequel ledit composant d'évacuation (12) est agencé pour constituer, avec son extrémité fermée (29), un bouchon de fermeture pour fermer le trou longitudinal (25) de l'élément de filtration (11), afin d'éviter des fuites et une pollution résultante du fluide filtré par le fluide qui reste à filtrer, **caractérisé en ce que** ladite extrémité fermée (29) du composant d'évacuation (12) vient en butée contre le volet inséré dans le trou longitudinal (25) de l'élément de filtration (11), de façon à pousser le volet coulissant vers le bas, fermant ainsi le canal de purge du filtre.

2. Filtre selon la revendication 1, **caractérisé en ce que** le composant d'évacuation (12) comprend une portion d'épaulement (26) prévue sur le bord de l'orifice (24) du composant d'évacuation (12) et adaptée pour être associée en butée à la seconde surface (19b) de la première bride (19).

3. Filtre selon la revendication 1 ou 2, **caractérisé en ce que** le composant d'évacuation (12) comprend une surface d'étanchéité (28) sur sa surface intérieure située près de l'orifice (24).

4. Filtre selon la revendication 3, **caractérisé en ce que** le composant d'évacuation (12) comprend un collier (33) prévu sur la surface d'étanchéité (28) et adapté pour être raccordé de façon amovible à un couvercle de filtre.

5. Filtre selon la revendication 3 ou 4, **caractérisé en ce que** le composant d'évacuation (12) comprend un joint d'étanchéité logé sur la surface d'étanchéité (28).

6. Filtre selon l'une quelconque des revendications précédentes, **caractérisé en ce que** le composant d'évacuation (12) a une forme tronconique avec une extrémité fermée (29) et un orifice ouvert (24).

7. Filtre selon l'une quelconque des revendications précédentes, **caractérisé en ce que** les moyens complémentaires pouvant être raccordés de façon amovible (41) sont prévus sur la surface extérieure de l'orifice (24) et sont configurés pour pouvoir être raccordés de façon amovible aux moyens de raccordement (31) de la première bride (19).

8. Filtre selon l'une quelconque des revendications précédentes, **caractérisé en ce que** lesdits moyens pouvant être raccordés de façon amovible (31) sont constitués d'un élément élastique et **en ce que** lesdits moyens complémentaires (41) sont constitués d'une gorge (42).

9. Filtre selon l'une quelconque des revendications précédentes, **caractérisé en ce que** le composant d'évacuation (12) comprend au moins une ouverture (30) adaptée pour raccorder la partie intérieure du composant d'évacuation (12) à un canal de sortie de fluide du filtre.

10. Filtre selon l'une quelconque des revendications précédentes, **caractérisé en ce que** ladite première bride (19) est configurée de sorte que la première surface (19a) soit fixée à une structure de support interne (27) et **en ce que** ledit matériau de filtration (17) est agencé de façon à définir une surface intérieure (16) se trouvant contre ladite structure de support interne (27), afin de former des surfaces pour le passage du liquide vers le canal de sortie du filtre.
